# EUROPÄISCHE PATENTSCHRIFT

(11) **EP 2 232 458 B1**
(45) Veröffentlichungstag und Bekanntmachung des Hinweises auf die Patenterteilung: **27.06.2018**
(21) Anmeldenummer: 08860426.9
(22) Anmeldetag: 09.12.2008
(51) Int. Cl.: G08G 1/095, G08G 1/0967

(54) **VERFAHREN UND VORRICHTUNG ZUR UNTERSTÜTZUNG EINES FAHRZEUGBEDIENERS**
METHOD AND DEVICE FOR ASSISTING A VEHICLE OPERATOR
PROCÉDÉ ET DISPOSITIF D'ASSISTANCE À UN UTILISATEUR DE VÉHICULE

(30) Priorität: 13.12.2007 DE 102007060603; 09.12.2008 DE 102008060869
(43) Veröffentlichungstag der Anmeldung: 29.09.2010
(73) Patentinhaber: Continental Teves AG & Co. oHG, 60488 Frankfurt (DE)
(72) Erfinder: STÄHLIN, Ulrich, 65670 Eschborn (DE); SWOBODA, Adam, 64521 Gross-gerau (DE); GROTENDORST, Thomas, 65760 Eschborn (DE)
(74) Vertreter: Wagner, Philipp
(86) Internationale Anmeldenummer: PCT/EP2008/067066
(87) Internationale Veröffentlichungsnummer: WO 2009/074547

(56) Entgegenhaltungen:
- EP-A- 1 346 892
- EP-A- 1 628 276
- DE-T2- 60 106 794
- US-A- 5 940 010
- US-A1- 2005 140 523
- US-A1- 2007 222 638

## Beschreibung

### Technisches Gebiet

Die Erfindung betrifft ein Verfahren und eine Vorrichtung zum Unterstützen eines Bedieners eines Fahrzeugs. Insbesondere erfolgt dabei eine Unterstützung im Hinblick auf eine Verkehrssignalanlage, die das Überfahren einer Haltelinie in einem Betriebszustand erlaubt und in einem weiteren Betriebszustand nicht erlaubt.

### Hintergrund der Erfindung

Im Straßenverkehr werden häufig Verkehrssignalanlagen verwendet, um den Verkehrsfluss zu steuern. Den Verkehrssignalanlagen ist üblicherweise eine Haltelinie zugeordnet, die ein Fahrzeug in einem ersten Betriebszustand der Verkehrssignalanlage passieren kann, während es Fahrzeugen in einem zweiten Betriebszustand der Verkehrssignalanlage nicht erlaubt ist, die Haltelinie zu überfahren. Der erste Betriebszustand der Verkehrssignalanlage wird dabei üblicherweise durch ein Rotlicht und der zweite Betriebszustand durch ein Grünlicht kenntlich gemacht.

Oftmals kommt es zu schweren Unfällen, wenn ein Fahrzeug die einer Verkehrssignalanlage zugeordnete Haltelinie bei Rotlicht überfährt. Ursache hierfür kann beispielsweise sein, dass der Fahrer des Fahrzeugs die Verkehrssignalanlage schlicht übersehen hat. Darüber hinaus wird es von Fahrzeugbedienern in der Regel als störend empfunden, ihr Fahrzeug an einer Verkehrssignalanlage anhalten zu müssen. Oftmals könnte dies zwar dadurch verhindert werden, dass bei der Annäherung an die Verkehrssignalanlage eine geeignete Fahrzeuggeschwindigkeit eingestellt wird. Diese kann von dem Fahrer jedoch in der Regel nicht ermittelt werden.

Die US 2005/0140523 A1 beschreibt eine Verkehrskontrollvorrichtung, welche Mittel zum Übertragen eines Stopp- und Fahrzyklus an ein Fahrzeug und Mittel zum Berechnen und Anzeigen der optimiertesten / effizientesten Geschwindigkeit an Fahrer- oder Fahrzeugsteuersystem umfasst, so dass das Fahrzeug die Geschwindigkeit während der Zyklen in der Weise anpassen kann, dass kein Stoppvorgang an der Verkehrskontrollvorrichtung notwendig ist.

### Darstellung der Erfindung

Es ist daher eine Aufgabe der vorliegenden Erfindung, einen Fahrzeugbediener bei der Annäherung seines Fahrzeugs an eine Verkehrssignalanlage zu unterstützen.

Die Aufgabe wird durch ein Verfahren mit den Merkmalen des Patentanspruchs 1 und durch ein System mit den Merkmalen des Patentanspruchs 12 gelöst. Ausführungsformen des Verfahrens und der Vorrichtung sind in den abhängigen Ansprüchen angegeben.

Gemäß einem ersten Aspekt der Erfindung wird ein Verfahren zur Unterstützung eines Bedieners eines Fahrzeugs vorgeschlagen, welches sich einer Verkehrssignalanlage nähert, die in wenigstens einem ersten Betriebszustand ein Überfahren einer Haltelinie erlaubt und in einem zweiten Betriebszustand ein Überfahren der Haltelinie nicht erlaubt. Bei dem Verfahren wird in dem Fahrzeug ein Signal empfangen, welches den aktuellen Betriebszustand der Verkehrssignalanlage und die Zeitdauer bis zu einem Wechsel des Betriebszustands beschreibt. Anhand des empfangenen Signals wird in dem Fahrzeug geprüft, ob das Fahrzeug die Haltelinie mit einer Geschwindigkeit aus einem vorgegebenen Geschwindigkeitsbereich erreichen kann, während sich die Signalanlage im ersten Betriebszustand befindet. In Abhängigkeit von dem Ergebnis der Prüfung wird eine Geschwindigkeit des Fahrzeugs beeinflusst und/oder eine Empfehlung zur Beeinflussung der Geschwindigkeit erzeugt.

Gemäß einem weiteren Aspekt der Erfindung wird ein System zum Unterstützen eines Bedieners eines Fahrzeugs bereitgestellt, das sich einer Verkehrssignalanlage nähert, die in wenigstens einem ersten Betriebszustand ein Überfahren einer Haltelinie erlaubt und in einem zweiten Betriebszustand ein Überfahren der Haltelinie nicht erlaubt. Das System umfasst eine Kommunikationsschnittstelle, die dazu ausgestaltet ist, ein Signal zu empfangen, welches den aktuellen Betriebszustand der Verkehrssignalanlage und die Zeitdauer bis zu einem Wechsel des Betriebszustands beschreibt. Ferner ist eine Auswerteeinheit enthalten, die dazu ausgestaltet ist, anhand des empfangenen Signals zu prüfen, ob das Fahrzeug die Haltelinie mit einer Geschwindigkeit aus einem vorgegebenen Geschwindigkeitsbereich erreichen kann, während sich die Signalanlage im ersten Betriebszustand befindet. Ferner beinhaltet das System eine Steuereinheit, die dazu ausgebildet ist, in Abhängigkeit von dem Ergebnis der Prüfung eine Geschwindigkeit des Fahrzeugs zu beeinflussen und/oder eine Erzeugung einer Empfehlung zur Beeinflussung der Geschwindigkeit zu steuern.

Ein Vorteil der Erfindung besteht darin, dass vermieden werden kann, dass ein Fahrzeugbediener die Haltelinie unbeabsichtigt überfährt, während sich die Verkehrssignalanlage in dem zweiten Betriebszustand befindet, in dem das Überfahren der Haltelinie nicht erlaubt ist. Hierdurch wird die Verkehrssicherheit an Verkehrssignalanlagen erhöht. Ein weiterer Vorteil der Erfindung besteht darin, dass die Längsgeschwindigkeit des Fahrzeugs direkt oder über eine entsprechende Empfehlung indirekt derart beeinflusst werden kann, dass das Fahrzeug die Haltelinie passieren kann, während sich die Verkehrssignalanlage im ersten Betriebszustand befindet, ohne dass das Fahrzeug zuvor angehalten werden muss. Hierdurch kann das von dem Fahrzeugbediener als störend wahrgenommene Anhalten an der Haltelinie vermieden und somit der Fahrkomfort erhöht werden.

In einer Ausgestaltung des Verfahrens und des Systems ist es vorgesehen, dass eine Sollgeschwindigkeit berechnet wird, bei welcher das Fahrzeug die Haltelinie erreichen kann, wenn sich die Verkehrssignalanlage im ersten Betriebszustand befindet. Vorteilhaft wird in dieser Ausgestaltung eine Sollgeschwindigkeit derart berechnet, dass das Fahrzeug zu der Haltelinie gelangt, wenn es ihm erlaubt ist, die Haltelinie zu passieren. Dies kann dabei entweder in einer aktuell vorliegenden Phase erfolgen, in der sich die Verkehrssignalanlage in dem ersten Betriebszustand befindet, oder - wenn sich die Verkehrssignalanlage aktuell im zweiten Betriebszustand befindet - in einer folgenden Phase, in der die Verkehrssignalanlage den ersten Betriebszustand besitzt.

Eine weitere Ausgestaltung des Verfahrens und des Systems sieht vor, dass die ermittelte Sollgeschwindigkeit durch eine automatische Bremsenbetätigung und/oder durch eine automatische Anpassung eines Antriebsmoments des Fahrzeugs eingestellt wird. Vorzugsweise geschieht dies mittels eines adaptiven Abstand- und Geschwindigkeitsreglers, welcher die Fahrzeuggeschwindigkeit auf die Sollgeschwindigkeit einregelt, solange ein Abstand zwischen dem Fahrzeug und einem vorausfahrenden Objekt größer als ein Schwellenwert ist. Wird der Schwellenwert unterschritten, wird die Fahrzeuggeschwindigkeit anhand einer Abstandsregelung so eingestellt, dass der Abstand zwischen dem Fahrzeug und einem vorausfahrenden Hindernis einen bestimmten Wert annimmt. Hierdurch werden Auffahrunfälle bei der Annäherung an die Verkehrssignalanlage verhindert.

Eine Weiterbildung des Verfahrens und des Systems zeichnet sich dadurch aus, dass eine von dem Fahrzeugbediener bedienbare Bedieneinrichtung zur Beeinflussung eines Antriebsmoments des Fahrzeugs in Abhängigkeit von dem Ergebnis der Prüfung mit einer steuerbaren Rückstellkraft beaufschlagt wird. Hierdurch kann der Fahrzeugbediener darauf aufmerksam gemacht werden, dass sich das Fahrzeug einer Verkehrssignalanlage nähert. Ferner kann der Fahrzeugbediener anhand der Rückstellkraft auf den Zustand der Verkehrssignalanlage aufmerksam gemacht werden.

Die Ausgabe einer Fahrempfehlung anhand einer auf die Bedieneinrichtung ausgeübten Rückstellkraft ist vor allem dann wirkungsvoll, wenn der Fahrzeugbediener die Bedieneinrichtung gerade betätigt. Insbesondere dann, wenn die von dem Fahrzeugbediener eingestellte Fahrzeuggeschwindigkeit zu groß ist, kann der Fahrer anhand der Rückstellkraft dazu veranlasst werden, die Fahrzeuggeschwindigkeit zu verringern. Daher beinhaltet eine Ausführungsform des Verfahrens und des Systems, dass die Bedieneinrichtung mit einer steuerbaren Rückstellkraft beaufschlagt wird, wenn das Fahrzeug mit einer verminderten Geschwindigkeit die Haltelinie erreichen kann, wenn sich die Signalanlage im ersten Betriebszustand befindet.

Eine verbundene Ausgestaltung des Verfahrens und des Systems ist dadurch gekennzeichnet, dass die steuerbare Rückstellkraft in Abhängigkeit von einer Differenz zwischen einer erfassten Fahrzeuggeschwindigkeit und der Sollgeschwindigkeit bestimmt wird. Vorzugsweise wird dabei eine Geschwindigkeitsregelung vorgenommen, bei der die steuerbare Rückstellkraft als Stellgröße ausgegeben wird.

Gleichfalls ist es bei einer Ausführungsform des Verfahrens und des Systems vorgesehen, dass die Bedieneinrichtung mit einer steuerbaren Rückstellkraft beaufschlagt wird, falls das Fahrzeug die Haltelinie nicht mit einer Geschwindigkeit aus dem vorgegebenen Geschwindigkeitsbereich erreichen kann, wenn sich die Verkehrssignalanlage in dem ersten Betriebzustand befindet. In diesem Fall muss das Fahrzeug an der Haltelinie angehalten werden. Anhand der Rückstellkraft wird der Fahrer hierauf hingewiesen und davor gewarnt, die Haltelinie zu überfahren, wenn sich die Verkehrssignalanlage in dem zweiten Betriebszustand befindet. Der vorgegebene Geschwindigkeitsbereich umfasst vorzugsweise Geschwindigkeiten, die größer als ein Schwellenwert sind.

Vorzugsweise wird in der zuvor genannten Situation eine vorgegebene Rückstellkraft eingestellt. Hierbei kann es sich insbesondere um eine maximal einstellbare Rückstellkraft handeln, um den Hinweis bzw. die Warnung so deutlich wie möglich zu vermitteln.

In Ausgestaltungen des Verfahrens und des Systems kann der Fahrzeugbediener die Fahrempfehlung überstimmen, wenn er dies wünscht bzw. für erforderlich hält.

Insbesondere sieht eine Ausgestaltung des Verfahrens und des Systems vor, dass eine steuerbare Rückstellkraft zur Beaufschlagung der Bedieneinrichtung zurückgenommen wird, wenn die Stellung der Bedieneinrichtung in einer Richtung entgegen der Rückstellkraft verändert worden ist. Hierdurch hat der Fahrzeugbediener die Möglichkeit, eine Rücknahme der steuerbaren Rückstellkraft zu bewirken, indem er die Bedieneinrichtung mit einer größeren Kraft entgegen der Rückstellkraft betätigt.

Eine Ausgestaltung des Verfahrens und des Systems ist dadurch gekennzeichnet, dass die steuerbare Rückstellkraft zur Beaufschlagung der Bedieneinrichtung zurückgenommen wird, wenn mittels der Bedieneinrichtung über einen Zeitraum, der eine vorgegebene Dauer überschreitet, ein höheres Antriebsmoment angefordert wird als vor der Beaufschlagung der Bedieneinrichtung mit der steuerbaren Rückstellkraft. Vorteilhaft wird die Rückstellkraft in dieser Ausgestaltung nur dann zurückgenommen, wenn der Fahrzeugbediener die Stellung der Bedieneinrichtung während einer vorgegebenen Dauer in eine Richtung entgegen der Rückstellkraft verändert hat.

Eine weitere Ausgestaltung des Verfahrens und des Systems beinhaltet, dass die steuerbare Rückstellkraft zur Beaufschlagung der Bedieneinrichtung zurückgenommen wird, wenn die Stellung der Bedieneinrichtung mit einer Änderungsrate, die einen vorgegebenen Wert überschreitet, in Richtung entgegen der Rückstellkraft verändert wird. Vorteilhaft wird die Rücknahme der steuerbaren Rückstellkraft in dieser Ausgestaltung von der Geschwindigkeit abhängig gemacht, mit welcher der Fahrzeugbediener die Bedieneinrichtung in Richtung entgegen der Rückstellkraft betätigt.

Ferner beinhaltet eine Ausgestaltung des Verfahrens und des Systems, dass die Bedieneinrichtung als ein Fahrpedal ausgestaltet ist. Ein derartiges Fahrpedal wird vor allem in vier- oder mehrrädrigen Fahrzeugen üblicherweise als Bedieneinrichtung verwendet, mit welcher der Fahrzeugbediener einen Antriebsmotor des Fahrzeugs steuern kann. Gleichfalls kann es sich bei der Bedieneinrichtung jedoch beispielsweise auch um einen Drehgriff handeln. Ein solcher dient üblicherweise bei Zweirädern dazu, den Antriebsmotor zu steuern. Auch ein Joystick als Bedieneinrichtung ist denkbar, wie er z.B. bei Sonderfahrzeugen oder Drive-by-Wire Fahrzeugen verwendet wird.

Darüber hinaus sieht eine Ausführungsform des Verfahrens und des Systems vor, dass das Signal, welches den aktuellen Betriebszustand der Verkehrssignalanlage und die Zeitdauer bis zu einem Wechsel des Betriebszustands beschreibt, von einer der Verkehrssignalanlage zugeordneten Sendeeinrichtung gesendet und mittels einer Funkschnittstelle des Kraftfahrzeugs empfangen wird. Diese Ausführungsform hat den Vorteil, dass das Signal über eine Funkverbindung an das Fahrzeug übertragen werden kann. Die Funkverbindung kann beispielsweise als eine DSRC-Verbindung (DSRC: Dedicated Short Range Communication) ausgestaltet sein, die für eine so genannte Fahrzeug-zu-X-Kommunikation verwendet werden kann. Gleichfalls kann die Funkverbindung jedoch auch auf einer anderen Funktechnologie basieren.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

### Kurze Beschreibung der Figuren

Von den Figuren zeigt:
- Fig. 1: eine schematische Darstellung eines Fahrzeugs mit einem Assistenzsystem zum Unterstützen des Fahrzeugbedieners bei der Annäherung an eine Verkehrssignalanlage,
- Fig. 2: eine schematische Darstellung des Fahrzeugs in einer Situation, in der es sich einer Verkehrssignalanlage nähert und
- Fig. 3: ein schematisches Blockdiagramm mit Komponenten des Assistenzsystems.

### Darstellung von Ausführungsbeispielen

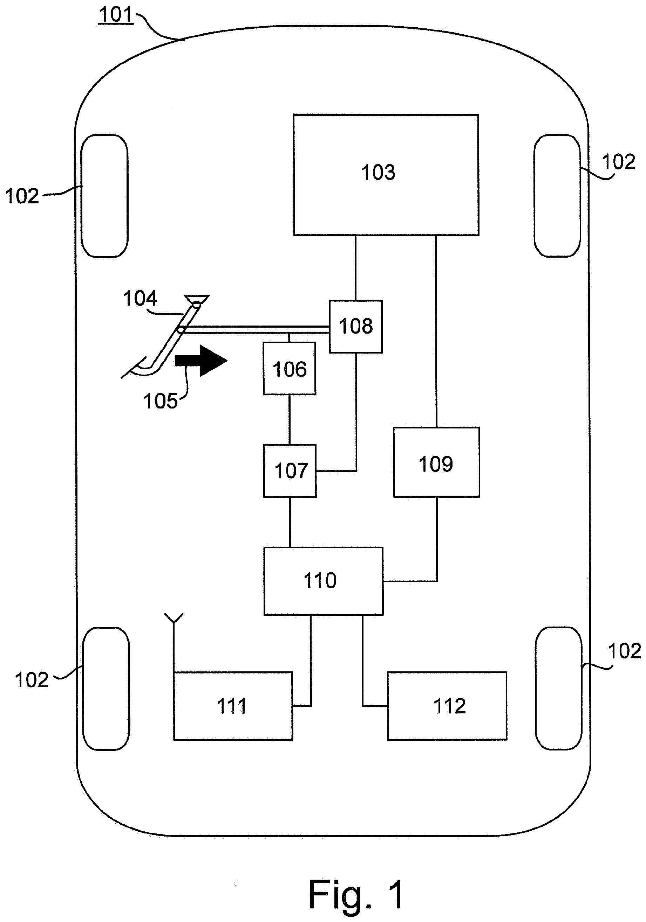

In Fig. 1 ist in einer schematischen Darstellung ein Kraftfahrzeug 101 mit vier Rädern 102 dargestellt. Das Kraftfahrzeug 101 wird durch einen Antriebsmotor 103 angetrieben, bei dem es sich beispielsweise um einen Verbrennungsmotor, einem Elektromotor oder einem Hybridmotor handeln kann. Der Antriebsmotor 103 erzeugt ein Motordrehmoment, das über einen in der Figur nicht dargestellten Antriebsstrang an zwei oder vier Fahrzeugräder 102 übertragen wird, um diese Räder 102 anzutreiben. Von dem Fahrer des Fahrzeugs 101 wird der Antriebsmotor 103 mittels eines Fahrpedals 104 gesteuert. In der Regel entspricht die Stellung des Fahrpedals 104 einer zugeordneten Motordrehzahl- und/oder Antriebsmomentanforderung des Fahrers. Eine Veränderung der Fahrpedalstellung in eine Betätigungsrichtung, die in Figur 1 anhand eines Pfeils 105 dargestellt ist, führt dabei zu einer Erhöhung der Motordrehzahl und/oder des von dem Antriebsmotor 103 bereitgestellten Antriebsmoments.

Dem Fahrpedal 104 ist in einer Ausgestaltung ein Kraftsteuerglied 106 zugeordnet, das eine steuerbare Rückstellkraft auf das Fahrpedal 104 ausüben kann, die in einer der Betätigungsrichtung 105 entgegen gesetzten Richtung wirkt. Zusätzlich zu dem Kraftsteuerglied 106 ist an dem Fahrpedal 104 vorzugsweise ein in der Figur nicht dargestelltes passives Federelement angeordnet, welches das Fahrpedal 104 abstützt. Die von dem Kraftsteuerglied 106 erzeugte Rückstellkraft wirkt dabei zusätzlich zu der von dem passiven Federelement ausgeübten Rückstellkraft. Das Kraftsteuerglied 106 wird von einer Fahrpedalsteuereinheit 107 gesteuert, die Steuerbefehle an das Kraftsteuerglied 106 senden kann, die zur Erzeugung einer vorgegebenen Rückstellkraft führen. Die Fahrpedalsteuereinheit 107 ist vorzugsweise Bestandteil eines Steuergeräts, das einen Mikroprozessor zur Ausführung von Programmen umfasst, deren Programmcode in dem Steuergerät gespeichert werden kann. Die Fahrpedalsteuereinheit 107 kann dabei in Form eines oder mehrerer Programmmodule implementiert sein.

Die Stellung des Fahrpedals 104 wird mittels eines Fahrpedalsensors 108 erfasst. Der Fahrpedalsensor 108 überträgt Informationen über die Fahrpedalstellung vorzugsweise zu einer Motorsteuerung, die den Antriebsmotor 103 in Abhängigkeit von der Fahrpedalstellung steuert. Darüber hinaus wird das Messsignal des Fahrpedalsensors 108 vorzugsweise auch an die Fahrpedalsteuereinheit 107 übermittelt.

Darüber hinaus kann das Fahrzeug 101 über ein an sich bekanntes Geschwindigkeitsregelsystem verfügen. Das System umfasst einen Geschwindigkeitsregler 109, der die Fahrzeuggeschwindigkeit in einer Ausgestaltung auf einen vorgegebenen Sollwert einregelt. In einer weiteren Ausgestaltung kann es sich um einen adaptiven Geschwindigkeitsregler 109 handeln, der eine Geschwindigkeits- und Abstandsregelung vornimmt. Dabei wird eine vorgegebene Sollgeschwindigkeit aufrechterhalten, solange ein Abstand zwischen dem Fahrzeug 101 und einem vorausfahrenden Objekt einen Schwellenwert nicht unterschreitet. Ist dies jedoch der Fall, wird eine Abstandsregelung so durchgeführt, dass der Abstand zu dem vorausfahrenden Objekt auf einem Sollwert gehalten wird. Der Schwellenwert und der Sollwert sind in der Regel geschwindigkeitsabhängig und können übereinstimmen. Vorausfahrende Hindernisse werden mit einer in der Figur nicht dargestellten Umfeldsensorik des Fahrzeugs 101 erfasst, die beispielsweise einen Radar- oder Lidarsensor umfasst. Zur Beeinflussung der Fahrzeuggeschwindigkeit kann der Geschwindigkeitsregler 109 den Antriebsmotor 103 anhand entsprechender Steuerbefehle steuern. Vorzugsweise kann der Geschwindigkeitsregler 109 zudem eine in der Figur nicht dargestellte Bremsanlage betätigen. Diese kann beispielsweise als hydraulische Bremsanlage ausgeführt sein und eine dem Fachmann an sich bekannte Hydraulikeinheit umfassen, die einen automatischen Bremsdruckaufbau ermöglicht und von dem Geschwindigkeitsregler 109 angesteuert wird.

Um den Fahrer des Fahrzeugs 101 bei der Fahrzeugführung während der Annäherung an eine Ampelanlage 201 zu unterstützen, ist ein Assistenzsystem vorgesehen, welches eine Steuereinrichtung 110 umfasst. In einer Ausgestaltung ist die Steuereinrichtung 110 dazu in der Lage, Steuerbefehle zur Einstellung einer Rückstellkraft an dem Fahrpedal 104 an die Fahrpedalsteuereinheit 107 zu senden. Gleichfalls kann es auch vorgesehen sein, dass das Kraftsteuerglied 106 direkt von der Steuereinrichtung 110 gesteuert wird bzw. die Fahrpedalsteuereinheit 107 in die Steuereinrichtung 110 integriert ist. Alternativ oder zusätzlich kann die Steuereinrichtung 110 Sollwertvorgaben an den Geschwindigkeitsregler 109 übermitteln. Bei der Steuereinrichtung 110 handelt es sich vorzugsweise ebenfalls um ein Programm, das in einem Steuergerät des Fahrzeugs 101 ausgeführt wird. Hierbei kann es sich um dasselbe Steuergerät handeln, das auch die Fahrpedalsteuereinheit 107 und/oder den Geschwindigkeitsregler 109 umfasst. Gleichfalls kann die Steuereinrichtung 110 jedoch auch in einem weiteren Steuergerät enthalten sein.

Zur Ausführung der Assistenzfunktion verwendet die Steuereinrichtung 110 Informationen über den Betriebszustand und die Position einer Ampelanlage 201, der sich das Fahrzeug 101 nähert, die vorzugsweise über eine Funkverbindung an das Fahrzeug 101 übertragen werden. In dem Fahrzeug 101 werden die Informationen mittels einer Funkschnittstelle 111 empfangen. Die Funkverbindung kann beispielsweise als eine DSRC-Verbindung ausgestaltet sein, die eine Adhoc-Kommunikation zwischen Fahrzeugen bzw. zwischen einem Fahrzeug und einem stationären Sender ermöglicht. Die Funkschnittstelle 111 ist in diesem Fall entsprechend der DSRC-Spezifikation ausgestaltet. Gleichfalls kann jedoch auch eine andere Kommunikationstechnologie, wie beispielsweise WLAN (Wireless Local Area Network), GPRS, UMTS, LTE, WiMax, etc. verwendet werden.

Weitere Eingangssignale der Steuerungseinrichtung 110 werden von einer Positionsbestimmungseinrichtung 112 des Fahrzeugs 101 bereitgestellt, die es ermöglicht, die Position des Fahrzeugs 101 und seine Bewegungsrichtung festzustellen. Vorzugsweise wird dabei eine fahrspurgenaue Positionsermittlung ermöglicht. Die Positionsbestimmungseinrichtung 112 kann beispielsweise als ein satellitengestütztes Ortungssystem ausgestaltet sein, das etwa auf dem GPS (Global Positioning System), dem DGPS (Differential Global Positioning System) oder einem anderen Satellitennavigationssystem basiert. Vorzugsweise kann die Positionsbestimmungseinrichtung 112 auch auf Kartendaten zugreifen, die das Wegenetz der geographischen Region beschreiben, in der sich das Fahrzeug 101 befindet. Anhand der Kartendaten kann die Positionsbestimmungseinrichtung 112 die ermittelte Position des Fahrzeugs 101 einem bestimmten Fahrweg des Wegenetzes und vorzugsweise auch einer Fahrspur des Fahrwegs zuordnen. Die Kartendaten können auf einem digitalen Datenträger gespeichert sein, der mit einer Leseeinrichtung des Fahrzeugs 101 ausgelesen werden kann. Die Positionsbestimmungseinrichtung 112 sowie die Kartendaten können Bestandteil eines Navigationssystems des Fahrzeugs 101 sein, das eine Route zu einem vorgegebenen Navigationsziel berechnen und den Fahrer entlang dieser Route leiten kann.

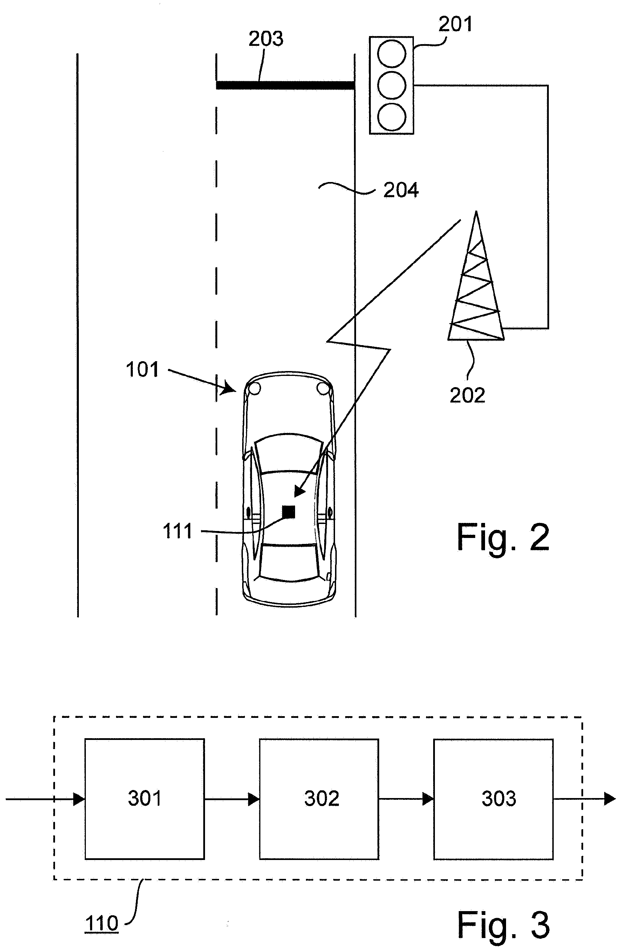

In Figur 2 ist in einer schematischen Darstellung das Fahrzeug 101 in einer Situation gezeigt, in der es sich einer Ampelanlage 201 nähert. Im Bereich Ampelanlage 201 ist auf einer Fahrspur 204 des Fahrzeugs 101 eine Haltelinie 203 angeordnet, die von dem Fahrzeug 101 überfahren werden kann, wenn sich die Ampelanlage 201 in einem ersten Betriebszustand befindet, der im Folgenden auch als Grünphase bezeichnet wird. In einem zweiten Betriebszustand der Ampelanlage 201, der im Folgenden auch als Rotphase bezeichnet wird, ist es dem Fahrzeug 101 nicht erlaubt, die Haltelinie 203 zu überfahren. Darüber hinaus kann die Ampelanlage 201 in bekannter Weise über einen dritten Betriebszustand verfügen, in dem ein Übergang von dem ersten in den zweiten Betriebszustand oder umgekehrt angezeigt wird. Die Haltelinie 203 ist auf der Fahrspur 204 markiert oder es handelt sich um eine imaginäre Linie im Bereich der Ampelanlage 201.

Der Ampelanlage 201 ist eine Sendeeinrichtung 202 zugeordnet, die entsprechend der Kommunikationstechnologie ausgestaltet ist, auf der auch die Funkschnittstelle 111 des Fahrzeugs 101 basiert. Die Sendeeinrichtung 202 kann beispielsweise in der Ampelanlage 201 enthalten oder in der Nähe der Ampelanlage 201 angeordnet sein. Die Sendeeinrichtung 202 sendet ein Funksignal aus, das Positions- und Zustandsinformationen umfasst. Diese spezifizieren die Position der Haltelinie 203 anhand von Positionsdaten, die vorzugsweise ebenfalls zumindest fahrspurgenau sind. Ferner spezifizieren die Positions- und Zustandsinformationen den aktuellen Betriebszustand der Ampelanlage 201. Zudem wird die Zeitdauer bis zum Ende einer aktuellen Grünphase oder bis zum Beginn einer der aktuellen Rotphase nachfolgenden Grünphase angegeben.

Die von der Sendeeinrichtung 202 ausgesendeten Funksignale können von Fahrzeugen 101 empfangen werden, die sich innerhalb der Reichweite der Sendeeinrichtung 202 befinden. Die Reichweite kann beispielsweise einige 100 Meter betragen. Vorzugsweise werden in regelmäßigen Zeitabständen aktualisierte Positions- und Zustandsinformationen von der Sendeeinrichtung 202 gesendet, so dass den innerhalb der Reichweite der Sendeeinrichtung 202 befindlichen Fahrzeugen 101 stets aktuelle Positions- und Zustandsinformationen zur Verfügung stehen.

Wenn sich das Fahrzeug 101 innerhalb der Reichweite der Sendeeinrichtung 202 befindet, dann empfängt es die Positions- und Zustandsinformationen mittels der Funkschnittstelle 111, welche die Positions- und Zustandsinformationen an die Steuereinrichtung 110 weiterleitet, die die empfangenen Positions- und Zustandsinformationen verarbeitet. Ein schematisches Blockdiagramm der Steuereinrichtung 110 ist in Fig. 3 dargestellt. Wie in der Figur gezeigt, werden empfangene Positions- und Zustandsinformationen zunächst einer Auswerteeinheit 301 zugeführt. Diese prüft, ob das Fahrzeug 101 die Haltelinie 203 auf seiner Fahrspur erreicht, so dass die Ampelanlage 201 auf der Fahrstrecke des Fahrzeugs 101 zu beachten ist. Hierzu prüft die Auswerteeinheit 301, ob sich das Fahrzeug 101 derselben Fahrspur 204 befindet wie die Haltelinie 203 und ob sich das Fahrzeug 101 der Haltelinie 203 aufgrund seiner Bewegungsrichtung nähert. Dabei werden die Fahrspur des Fahrzeugs 101 und seine Bewegungsrichtung mittels der Positionsbestimmungseinrichtung 112 ermittelt und mit der in den Positions- und Zustandinformationen spezifizierten Position der Haltelinie 203 verglichen.

Wenn die Auswerteeinheit 301 feststellt, dass die Ampelanlage 201 nicht zu beachten ist - etwa weil sich das Fahrzeug 101 auf einer anderen Fahrspur befindet und/oder weil es sich von der Haltelinie 203 entfernt - werden die empfangenen Positions- und Zustandsinformationen verworfen. Wird hingegen festgestellt, dass das Fahrzeug 101 die Haltelinie 203 auf seiner Fahrstrecke erreichen wird, erfolgt eine Weiterverarbeitung der Positions- und Zustandsinformationen in einer Berechnungseinheit 302.

Die Berechnungseinheit 302 prüft, ob das Fahrzeug 101 die Haltelinie 203 während einer Grünphase der Ampelanlage 201 erreichen kann, ohne dass die Fahrzeuggeschwindigkeit einen vorgegebenen Bereich verlässt. Der vorgegebene Geschwindigkeitsbereich umfasst vorzugsweise Geschwindigkeiten zwischen einer vorgegebenen Mindestgeschwindigkeit und einer Höchstgeschwindigkeit. Als Höchstgeschwindigkeit kann beispielsweise die aktuelle Geschwindigkeit des Fahrzeugs 101 zugrunde gelegt werden. Diese kann etwa mithilfe von Raddrehzahlsensoren ermittelt werden. Gleichfalls kann es beispielsweise vorgesehen sein, dass als Höchstgeschwindigkeit eine erlaubte Geschwindigkeit verwendet wird, die beispielsweise von der Sendeeinrichtung 202 übermittelt wird und in den Positions- und Zustandsinformationen angegeben sein kann. In Abhängigkeit von dem Ergebnis der Prüfung steuert eine Steuerungseinheit 303 dann Komponenten des Fahrzeugs 101, um dem Fahrer des Fahrzeugs 101 Unterstützung zukommen zu lassen.

Die Berechnungseinheit 302 ermittelt zunächst anhand der empfangenen Positions- und Zustandinformationen, ob aktuell eine Grünphase der Ampelanlage 201 vorliegt oder einer Rotphase. Die daraufhin durchgeführte Prüfung, ob das Fahrzeug 101 die Haltelinie 203 innerhalb des vorgegebenen Geschwindigkeitsbereichs überqueren kann, und die in Abhängigkeit von dem Ergebnis der Prüfung eingeleiteten Maßnahmen unterscheiden sich, je nachdem ob aktuell eine Grünphase der Ampelanlage 201 oder einer Rotphase vorliegt.

Zunächst wird der Fall beschrieben, in dem die Berechnungseinheit 302 feststellt, dass aktuell eine Grünphase der Ampelanlage 201 vorliegt. In diesem Fall wird in einer Ausgestaltung eine Sollgeschwindigkeit berechnet, mit der das Fahrzeug 101 die Haltelinie 203 am Ende der Grünphase erreichen kann. Dadurch, dass auf das Ende der Grünphase abgestellt wird, wird die kleinste Sollgeschwindigkeit ermittelt, mit der die Haltelinie 203 noch innerhalb der Grünphase erreicht werden kann. Hierdurch werden zu hohe Geschwindigkeiten vermieden. Der Zeitpunkt, in dem die aktuelle Grünphase endet, wird dabei wird den Positions- und Zustandsinformationen entnommen. Bei der Berechnung der Sollgeschwindigkeit werden auch Beschleunigungs- bzw. Verzögerungsvorgänge berücksichtigt, die erforderlich sind, um die Sollgeschwindigkeit zu erreichen. Dabei kann die Berechnungseinheit 302 jeweils einen vorgegebenen Wert für die Beschleunigung bzw. Verzögerung zugrunde legen. Die ermittelte Sollgeschwindigkeit wird dann mit der vorgesehenen Höchstgeschwindigkeit verglichen werden. Wenn die Sollgeschwindigkeit größer ist als die Höchstgeschwindigkeit, dann stellt die Berechnungseinheit 302 fest, dass das Fahrzeug 101 die Haltelinie 203 nicht während der aktuellen Grünphase erreichen kann. Ist die Sollgeschwindigkeit nicht größer als die Höchstgeschwindigkeit, wird festgestellt, dass ein Passieren der Haltelinie 203 während der Grünphase möglich ist.

Falls es sich bei der Höchstgeschwindigkeit um die aktuelle Fahrzeuggeschwindigkeit handelt, kann es alternativ vorgesehen sein, dass die Berechnungseinheit 302 prüft, ob das Fahrzeug 101 die Haltelinie 203 unter Beibehaltung der Fahrzeuggeschwindigkeit erreichen würde, bevor die aktuelle Grünphase endet. Ist dies der Fall, wird festgestellt, dass ein Passieren der Haltelinie 203 während der Grünphase möglich ist. Ansonsten wird festgestellt, dass die Haltelinie 203 nicht während der Grünphase überfahren werden kann.

Wenn die Berechnungseinheit 302 feststellt, dass das Fahrzeug 101 die Haltelinie 203 innerhalb der aktuellen Grünphase überqueren kann, ohne das die Fahrzeuggeschwindigkeit den vorgegebenen Geschwindigkeitsbereich verlässt, und wenn die in der Berechnungseinheit 302 berechnete Sollgeschwindigkeit kleiner als die aktuelle Fahrzeuggeschwindigkeit ist, dann ist keine Veränderung des Fahrzustands des Fahrzeugs 101 erforderlich. In diesem Fall werden von der Steuereinheit 303 in einer Ausgestaltung keine weiteren Maßnahmen durchgeführt. In einer weiteren Ausgestaltung kann es vorgesehen sein, dass der Fahrer anhand einer optischen Anzeige die sich in seinem Blickfeld befindet, darüber informiert wird, dass sich das Fahrzeug 101 der Ampelanlage 201 nähert und diese bei Beibehaltung des aktuellen Fahrzustands passieren kann.

Sofern die vorgegebene Höchstgeschwindigkeit größer als die aktuelle Fahrzeuggeschwindigkeit ist, kann zudem der Fall eintreten, dass das Fahrzeug 101 die Haltelinie 203 zwar während der aktuellen Grünphase überqueren kann, die Fahrzeuggeschwindigkeit hierzu jedoch erhöht werden muss. Ist dies der Fall, kann es vorgesehen sein, dass die Steuereinheit 303 die in der Berechnungseinheit 302 ermittelte Sollgeschwindigkeit an den Geschwindigkeitsregler 109 übergibt. Dieser übernimmt die Sollgeschwindigkeit als Sollwert für die Geschwindigkeitsregelung. Sofern der Geschwindigkeitsregler nicht bereits aktiviert ist, kann er dabei in einer Ausgestaltung von der Steuereinheit 303 aktiviert werden. Von dem Geschwindigkeitsregler 109 wird die Fahrzeuggeschwindigkeit dann auf die berechnete Sollgeschwindigkeit eingeregelt, wenn hierdurch nicht der Abstand zu einem vorausfahrenden Hindernis bis unter den vorgegebenen Schwellenwert verringert wird. Alternativ oder zusätzlich kann auch in diesem Fall eine Fahrerinformation ausgegeben werden, die den Fahrer darüber in Kenntnis setzt, dass er sich der Ampelanlage 201 nähert und die Haltelinie 203 mit einer erhöhten Geschwindigkeit während der aktuellen Grünphase überqueren kann.

Wenn die Berechnungseinheit 302 feststellt, dass das Fahrzeug 101 die Haltelinie 203 nicht innerhalb der aktuellen Grünphase überqueren kann, ohne den vorgegeben Geschwindigkeitsbereich zu verlassen, dann steuert die Steuereinheit 303 in einer Ausgestaltung die Ausgabe eines Hinweises, die den Fahrer des Fahrzeugs 101 darüber informiert, dass er sich der Ampelanlage 201 nähert, und ihn auffordert an der Haltelinie 203 anzuhalten. Alternativ oder zusätzlich kann es vorgesehen sein, dass bei der Annäherung an die Haltelinie 203 in regelmäßigen Zeitabständen eine Verzögerung berechnet wird, die erforderlich ist, um das Fahrzeug 101 ausgehend von seiner aktuellen Position und seiner aktuellen Geschwindigkeit an der Haltelinie 203 in den Stillstand zu bringen. Die Verzögerung kann entweder in der Berechnungseinheit 302 oder in der Steuereinheit 303 berechnet werden. Wenn ein Wert der berechneten Verzögerung größer als ein vorgegebener Schwellenwert ist, dann wird von der Steuereinheit 303 eine weitere Maßnahme mit dem Ziel durchgeführt, das Überfahren der Haltelinie 203 während der auf die aktuelle Grünphase folgenden Rotphase zu verhindern. In einer Ausgestaltung steuert die Steuereinheit 303 dabei die Beaufschlagung des Fahrpedals 104 mit einer vorgegeben Rückstellkraft. Vorzugsweise handelt es sich hierbei um die maximale Rückstellkraft, die mittels des Kraftsteuerglieds 106 auf das Fahrpedal 104 ausgeübt werden kann. Hierzu kann die Steuereinheit 303 eine entsprechende Rückstellkraftanforderung an die Fahrpedalsteuereinheit 107 übermitteln, welche das Kraftsteuerglied 106 entsprechend der Anforderung ansteuert.

Wenn das Fahrpedal 104 in der zuvor beschriebenen Weise mit einer Rückstellkraft beaufschlagt wird, besteht für den Fahrer des Fahrzeugs 101 vorzugsweise die Möglichkeit, das Assistenzsystem zu überstimmen, das heißt eine Rücknahme der Rückstellkraft zu bewirken. Vorzugsweise erfolgt dies durch eine geeignete Betätigung des Fahrpedals 104. Um eine derartige Betätigung des Fahrpedals 104 zu erkennen, wird die Fahrpedalstellung von der Fahrpedalsteuereinheit 107 überwacht. Dies geschieht anhand der Signale des Fahrpedalsensors 108. In einer Ausgestaltung nimmt die Fahrpedalsteuereinheit 107 die Rückstellkraft dann zurück, wenn das Fahrpedal 104 über einen Zeitraum, der eine vorgegebene Dauer überschreitet, weiter in die Betätigungsrichtung 105 eingetreten ist, als in dem Zeitpunkt, in dem die Beaufschlagung des Fahrpedals 104 mit der Rückstellkraft begonnen wurde. Die Fahrpedalstellung in diesem Zeitpunkt wird zu diesem Zweck erfasst und in der Fahrpedalsteuereinheit 107 gespeichert. Weiterhin kann es vorgesehen sein, dass die Rückstellkraft dann zurückgenommen wird, wenn das Fahrpedal 104 mit einem Fahrpedalgradienten, der einen vorgegebenen Schwellenwert überschreitet, in Betätigungsrichtung 105 verändert wird, das heißt wenn der Fahrer das Fahrpedal 104 mit einer hohen Geschwindigkeit eintritt. Von der Fahrpedalsteuereinheit 107 kann eines der zuvor genannten Kriterien herangezogen werden oder es können beide Kriterien verwendet werden.

Nachfolgend wird nun der Fall beschrieben, dass die Berechnungseinheit 302 anhand der Positions- und Zustandinformationen ermittelt, dass sich die Ampelanlage 201 aktuell in einer Rotphase befindet. In diesem Fall prüft die Berechnungseinrichtung 302, ob das Fahrzeug 101 die Haltelinie 203 während der auf die Rotphase folgenden Grünphase überqueren kann, ohne dass der vorgegebene Geschwindigkeitsbereich verlassen wird. Vorzugsweise wird zu diesem Zweck eine Sollgeschwindigkeit berechnet, mit der das Fahrzeug 101 die Haltelinie 203 zu Beginn dieser Grünphase überfahren kann. Dadurch, dass auf den Beginn der Grünphase abgestellt wird, wird die größte Sollgeschwindigkeit ermittelt, mit der die Haltelinie 203 innerhalb Grünphase erreicht werden kann. Hierdurch werden zu geringe Geschwindigkeiten vermieden und es besteht eine hohe Wahrscheinlichkeit, dass das Fahrzeug 203 die Haltelinie innerhalb der Grünphase erreichen kann. Bei der Berechnung der Sollgeschwindigkeit werden wiederum Beschleunigungs- bzw. Verzögerungsvorgänge berücksichtigt, die erforderlich sind, um die Sollgeschwindigkeit einzustellen. Sofern die berechnete Sollgeschwindigkeit kleiner als die Mindestgeschwindigkeit ist, stellt die Berechnungseinheit 302 fest, dass das Fahrzeug 101 die Haltelinie 203 nicht während der auf die aktuelle Rotphase folgenden Grünphase passieren kann, ohne den vorgegebenen Geschwindigkeitsbereich zu verlassen. Andernfalls wird festgestellt, dass ein Passieren der Haltelinie 203 während dieser Grünphase möglich ist.

Wenn in der Berechnungseinheit 302 festgestellt wird, dass das Fahrzeug 101 die Haltelinie 203 in der auf die aktuelle Rotphase folgenden Grünphase passieren kann, ohne den vorgegebenen Geschwindigkeitsbereich zu verlassen, werden von der Steuereinheit 303 vorzugsweise Maßnahmen ausgeführt, um dies sicherzustellen.

Eine derartige Maßnahme ist die Übergabe der in der Berechnungseinheit 302 berechneten Sollgeschwindigkeit an den Geschwindigkeitsregler 109. In dem Geschwindigkeitsregler 109 wird diese Geschwindigkeit als Sollwert für die Geschwindigkeitsregelung übernommen. Damit regelt der Geschwindigkeitsregler 109 die Geschwindigkeit des Fahrzeugs 101 auf die berechnete Sollgeschwindigkeit ein, wenn der Abstand zwischen dem Fahrzeug 101 und einem vorausfahrenden Hindernis hierdurch nicht den vorgegebenen Schwellenwert unterschreitet. Sofern der Geschwindigkeitsregler 109 nicht bereits aktiviert ist, kann er dabei in einer Ausgestaltung von der Steuereinheit 303 aktiviert werden.

Eine weitere Maßnahme besteht darin, das Fahrpedal 104 mit einer Rückstellkraft zu beaufschlagen, die nach Maßgabe der Abweichung der aktuellen Fahrzeuggeschwindigkeit von der berechneten Sollgeschwindigkeit ermittelt wird. Die Rückstellkraft wird dabei mit betraglich steigender Abweichung vergrößert. Sofern die Fahrzeuggeschwindigkeit der berechneten Sollgeschwindigkeit entspricht, wird vorzugsweise keine Rückstellkraft auf das Fahrpedal 104 ausgeübt. Eine derartige Einstellung der Rückstellkraft kann mittels eines Reglers ausgeführt werden, der beispielsweise in der Fahrpedalsteuereinheit 107 enthalten ist, und das Kraftsteuerglied 106 steuert. Die dem Regler zugeführte Regelabweichung entspricht dabei der Differenz zwischen der aktuellen Fahrzeuggeschwindigkeit und der berechneten Sollgeschwindigkeit. Die in Abhängigkeit von der Regelabweichung bestimmte Stellgröße ist die Rückstellkraft, die mittels des Kraftsteuerglieds 106 auf das Fahrpedal 104 ausgeübt wird.

Die beiden zuvor beschriebenen Maßnahmen, also die Regelung der Fahrzeuggeschwindigkeit auf die berechnete Sollgeschwindigkeit mittels des Geschwindigkeitsreglers 109 und die Beaufschlagung des Fahrpedals 104 mit einer Rückstellkraft, die in Abhängigkeit von der Differenz zwischen der Fahrzeuggeschwindigkeit und der berechneten Sollgeschwindigkeit ermittelt wird, können sowohl alternativ als auch kumulativ durchgeführt werden. Anhand der Maßnahmen kann erreicht werden, dass sich das Fahrzeug 101 der Haltelinie 203 mit einer Geschwindigkeit nähert, die ausreichend gering ist um die Haltelinie 203 erst dann zu erreichen, wenn die auf die aktuelle Rotphase folgenden Grünphase beginnt.

Wenn die Berechnungseinheit 302 feststellt, dass das Fahrzeug 101 die Haltelinie 203 nicht in der auf die aktuelle Rotphase folgenden Grünphase passieren kann, ohne den vorgegebenen Geschwindigkeitsbereich zu verlassen, werden vorzugsweise die Maßnahmen ausgeführt, die zuvor bereits für den Fall beschrieben worden sind, in dem dies bei einer aktuellen Grünphase festgestellt wird. Dies bedeutet, dass in der zuvor beschriebenen Weise eine Fahrerinformation ausgegeben und/oder das Fahrpedal 104 mit einer vorgegebenen Rückstellkraft beaufschlagt wird. Die Rückstellkraft wird zurückgenommen, wenn wenigstens eine der zuvor bereits beschriebenen Bedingungen erfüllt ist.

## Patentansprüche

1. Verfahren zur Unterstützung eines Bedieners eines Fahrzeugs (101), welches sich einer Verkehrssignalanlage (201) nähert, die in wenigstens einem ersten Betriebszustand ein Überfahren einer Haltelinie (203) erlaubt und in einem zweiten Betriebszustand ein Überfahren der Haltelinie (203) nicht erlaubt, wobei
- eine Bestimmung der Position und der Bewegungsrichtung des Fahrzeugs durchgeführt wird
- in dem Fahrzeug (101) ein Signal empfangen wird, welches den aktuellen Betriebszustand der Verkehrssignalanlage und die Zeitdauer bis zu einem Wechsel des Betriebszustands beschreibt,
- in dem Fahrzeug (101) anhand des empfangenen Signals geprüft wird, ob das Fahrzeug (101) die Haltelinie (203) mit einer Geschwindigkeit aus einem vorgegebenen Geschwindigkeitsbereich erreichen kann, während sich die Verkehrssignalanlage (201) im ersten Betriebszustand befindet, und
- in Abhängigkeit von dem Ergebnis der Prüfung eine Geschwindigkeit des Fahrzeugs (101) beeinflusst und/oder eine Empfehlung zur Beeinflussung der Geschwindigkeit erzeugt wird,
**dadurch gekennzeichnet, dass**
eine von dem Fahrzeugbediener bedienbare Bedieneinrichtung (104) zur Beeinflussung eines Antriebsmoments des Fahrzeugs (101) in Abhängigkeit von dem Ergebnis der Prüfung mit einer steuerbaren Rückstellkraft beaufschlagt wird, wobei die steuerbare Rückstellkraft zur Beaufschlagung der Bedieneinrichtung (104) zurückgenommen wird, wenn die Stellung der Bedieneinrichtung (104) in einer Richtung entgegen der Rückstellkraft verändert worden ist.

2. Verfahren nach Anspruch 1, bei dem eine Sollgeschwindigkeit berechnet wird, bei welcher das Fahrzeug (101) die Haltelinie (203) erreichen kann, wenn sich die Verkehrssignalanlage (201) im ersten Betriebszustand befindet.

3. Verfahren nach Anspruch 2, bei dem die ermittelte Sollgeschwindigkeit durch eine automatische Bremsenbetätigung und/oder durch eine automatische Anpassung eines Antriebsmoments des Fahrzeugs (101) eingestellt wird.

4. Verfahren nach wenigstens einem der vorhergehenden Ansprüche, bei dem die Bedieneinrichtung (104) mit einer steuerbaren Rückstellkraft beaufschlagt wird, wenn das Fahrzeug (101) mit einer verminderten Geschwindigkeit die Haltelinie (203) erreichen kann, wenn sich die Verkehrssignalanlage (201) im ersten Betriebszustand befindet.

5. Verfahren nach Anspruch 1 bis 4, bei dem die steuerbare Rückstellkraft in Abhängigkeit von einer Differenz zwischen einer erfassten Fahrzeuggeschwindigkeit und der Sollgeschwindigkeit bestimmt wird.

6. Verfahren nach einem der Ansprüche 1 bis 5, bei dem die Bedieneinrichtung (104) mit einer steuerbaren Rückstellkraft beaufschlagt wird, falls das Fahrzeug (101) die Haltelinie (203) anhand einer aktuellen oder verminderten Fahrzeuggeschwindigkeit nicht erreichen kann, wenn sich die Verkehrssignalanlage (201) in dem ersten Betriebszustand befindet.

7. Verfahren nach Anspruch 6, bei dem eine vorgegebene Rückstellkraft eingestellt wird, wenn das Fahrzeug (101) die Haltelinie (203) nicht mit einer Geschwindigkeit aus dem vorgegebenen Geschwindigkeitsbereich erreichen kann, wenn sich die Verkehrssignalanlage (201) in dem ersten Betriebszustand befindet.

8. Verfahren nach einem der Ansprüche 1 bis 7, bei dem die steuerbare Rückstellkraft zur Beaufschlagung der Bedieneinrichtung (104) zurückgenommen wird, wenn mittels der Bedieneinrichtung (104) über einen Zeitraum, der eine vorgegebene Dauer überschreitet, ein höheres Antriebsmoment angefordert wird als vor der Beaufschlagung der Bedieneinrichtung (104) mit der steuerbaren Rückstellkraft.

9. Verfahren nach einem der Ansprüche 1 bis 8, bei dem die steuerbare Rückstellkraft zur Beaufschlagung der Bedieneinrichtung (104) zurückgenommen wird, wenn die Stellung der Bedieneinrichtung (104) mit einer Änderungsrate, die einen vorgegebenen Wert überschreitet, in Richtung entgegen der Rückstellkraft verändert wird.

10. Verfahren nach einem der Ansprüche 1 bis 9, bei dem die Bedieneinrichtung (104) als ein Fahrpedal ausgestaltet ist.

11. Verfahren nach einem der vorangegangenen Ansprüche, bei dem das Signal von einer der Verkehrssignalanlage (201) zugeordneten Sendeeinrichtung (202) gesendet und innerhalb des Fahrzeugs (101) mittels einer Funkschnittstelle (111) des Fahrzeugs (101) empfangen wird.

12. System zum Unterstützen eines Bedieners eines Fahrzeugs (101), das sich einer Verkehrssignalanlage (201) nähert, die in wenigstens einem ersten Betriebszustand ein Überfahren einer Haltelinie (203) erlaubt und in einem zweiten Betriebszustand ein Überfahren der Haltelinie (203) nicht erlaubt, umfassend eine Positionsbestimmungseinrichtung, die es ermöglicht, die Position des Fahrzeugs und seine Bewegungsrichtung festzustellen, eine Kommunikationsschnittstelle (111), die dazu ausgestaltet ist, ein Signal zu empfangen, welches den aktuellen Betriebszustand der Verkehrssignalanlage und die Zeitdauer bis zu einem Wechsel des Betriebszustands beschreibt, eine Auswerteeinheit (301), die dazu ausgestaltet ist, anhand des empfangenen Signals zu prüfen, ob das Fahrzeug (101) die Haltelinie (203) mit einer Geschwindigkeit aus einem vorgegebenen Geschwindigkeitsbereich erreichen kann, während sich die Verkehrssignalanlage (201) im ersten Betriebszustand befindet, und eine Steuereinheit (303), die dazu ausgebildet ist, in Abhängigkeit von dem Ergebnis der Prüfung eine Geschwindigkeit des Fahrzeugs (101) zu beeinflussen und/oder eine Erzeugung einer Empfehlung zur Beeinflussung der Geschwindigkeit zu steuern,
**dadurch gekennzeichnet, dass**
das System eine von dem Fahrzeugbediener bedienbare Bedieneinrichtung (104) zur Beeinflussung eines Antriebsmoments des Fahrzeugs (101) in Abhängigkeit von dem Ergebnis der Prüfung mit einer steuerbaren Rückstellkraft beaufschlagt, wobei die steuerbare Rückstellkraft zur Beaufschlagung der Bedieneinrichtung (104) zurückgenommen wird, wenn die Stellung der Bedieneinrichtung (104) in einer Richtung entgegen der Rückstellkraft verändert worden ist.

## Claims

1. A method for assisting an operator of a vehicle (101) approaching traffic lights (201) that allow driving over a stop line (203) in at least a first operating state and do not allow driving over the stop line (203) in a second operating state, wherein
- a determination of the position and of the moving direction of the vehicle is performed,
- a signal is received in the vehicle (101), said signal describing the current operating state of the traffic lights and the period of time until a change of the operating state,
- a check as to whether the vehicle (101) can reach the stop line (203) at a speed from a predetermined speed range while the traffic lights (201) are in the first operating state is performed in the vehicle (101) on the basis of the received signal, and
- depending on the result of the check, a speed of the vehicle (101) is influenced and/or a recommendation for influencing the speed is generated,
**characterised in that**
a controllable restoring force is applied to an operating device (104) in order to influence, depending on the result of the check, a driving torque of the vehicle (101), said operating device (104) being operable by the vehicle operator, wherein the controllable restoring force for being applied to the operating device (104) will be cancelled if the position of the operating device (104) was changed in a direction opposite to the restoring force.

2. The method according to claim 1, in which a desired speed is calculated at which the vehicle (101) can reach the stop line (203) when the traffic lights (201) are in the first operating state.

3. The method according to claim 2, in which the determined desired speed is set by automatically actuating the brake and/or by automatically adjusting a driving torque of the vehicle (101).

4. The method according to at least one of the preceding claims, in which a controllable restoring force will be applied to the operating device (104) if the vehicle (101) can reach the stop line (203) at a reduced speed when the traffic lights (201) are in the first operating state.

5. The method according to claims 1 to 4, in which the controllable restoring force is determined as a function of a difference between a detected vehicle speed and the desired speed.

6. The method according to any one of claims 1 to 5, in which a controllable restoring force will be applied to the operating device (104) if the vehicle (101) cannot reach the stop line (203) at a current or reduced vehicle speed when the traffic lights (201) are in the first operating state.

7. The method according to claim 6, in which a predetermined restoring force is set if the vehicle (101) cannot reach the stop line (203) at a speed from the predetermined speed range when the traffic lights (201) are in the first operating state.

8. The method according to any one of claims 1 to 7, in which the controllable restoring force for being applied to the operating device (104) will be cancelled if a driving torque that is higher than prior to applying the controllable restoring force to the operating device (104) is requested by means of the operating device (104) over a period of time that is longer than a predetermined duration.

9. The method according to any one of claims 1 to 8, in which the controllable restoring force for being applied to the operating device (104) will be cancelled if the position of the operating device (104) is changed in a direction opposite to the restoring force at a rate of change exceeding a predetermined value.

10. The method according to any one of claims 1 to 9, in which the operating device (104) is configured as an accelerator pedal.

11. The method according to any one of the preceding claims, in which the signal is transmitted by a transmitting device (202) associated with the traffic lights (201) and is received within the vehicle (101) by means of a radio interface (111) of the vehicle (101).

12. A system for assisting an operator of a vehicle (101) approaching traffic lights (201) that allow driving over a stop line (203) in at least a first operating state and do not allow driving over the stop line (203) in a second operating state, comprising a position determination device enabling the position of the vehicle and the moving direction thereof to be determined, a communication interface (111) configured to receive a signal describing the current operating state of the traffic lights and the period of time until a change of the operating state, an analysing unit (301) configured to check, on the basis of the received signal, whether the vehicle (101) can reach the stop line (203) at a speed from a predetermined speed range while the traffic lights (201) are in the first operating state, and a control unit (303) configured to influence a speed of the vehicle (101) and/or to control a generation of a recommendation for influencing the speed depending on the result of the check,
**characterised in that**
the system applies a controllable restoring force to an operating device (104) in order to influence, depending on the result of the check, a driving torque of the vehicle (101), said operating device (104) being operable by the vehicle operator, wherein the controllable restoring force for being applied to the operating device (104) will be cancelled if the position of the operating device (104) was changed in a direction opposite to the restoring force.

## Revendications

1. Procédé d'assistance à un utilisateur d'un véhicule (101), lequel s'approche d'une installation de signalisation routière (201), laquelle permet un franchissement d'une ligne d'arrêt (203) dans au moins un premier état de fonctionnement et ne permet pas un franchissement de la ligne d'arrêt (203) dans un deuxième état de fonctionnement,
- une détermination de la position et de la direction de déplacement du véhicule étant effectuée
- un signal étant reçu dans le véhicule (101), lequel signal décrit l'état de fonctionnement actuel de l'installation de signalisation routière et la durée jusqu'à un changement de l'état de fonctionnement,
- le fait de savoir si le véhicule (101) peut atteindre la ligne d'arrêt (203) avec une vitesse d'une plage de vitesse spécifiée étant vérifié dans le véhicule (101) à l'aide du signal reçu, pendant que l'installation de signalisation routière (201) se trouve dans le premier état de fonctionnement, et
- en fonction du résultat de la vérification, une vitesse du véhicule (101) étant influencée et/ou une recommandation d'influencer la vitesse étant générée,
**caractérisé en ce que**
un dispositif de commande (104) actionnable par l'utilisateur du véhicule pour l'influence d'un moment d'entraînement du véhicule (101) en fonction du résultat de la vérification est sollicité par une force de rappel contrôlable, la force de rappel contrôlable pour la sollicitation du dispositif de commande (104) étant annulée lorsque la position du dispositif de commande (104) a été modifiée dans une direction opposée à la force de rappel.

2. Procédé selon la revendication 1, par lequel une vitesse théorique avec laquelle le véhicule (101) peut atteindre la ligne d'arrêt (203) est calculée, lorsque l'installation de signalisation routière (201) se trouve dans le premier état de fonctionnement.

3. Procédé selon la revendication 2, par lequel la vitesse théorique déterminée est réglée par un actionnement des freins automatique et/ou par un ajustement automatique d'un moment d'entraînement du véhicule (101).

4. Procédé selon au moins l'une des revendications précédentes, par lequel le dispositif de commande (104) est sollicité par une force de rappel contrôlable lorsque le véhicule (101) peut atteindre la ligne d'arrêt (203) avec une vitesse réduite lorsque l'installation de signalisation routière (201) se trouve dans le premier état de fonctionnement.

5. Procédé selon la revendication 1 à 4, par lequel la force de rappel contrôlable est déterminée en fonction d'une différence entre une vitesse de véhicule détectée et la vitesse théorique.

6. Procédé selon l'une des revendications 1 à 5, par lequel le dispositif de commande (104) est sollicité par une force de rappel contrôlable si le véhicule (101) ne peut pas atteindre la ligne d'arrêt (203) à l'aide d'une vitesse de véhicule actuelle ou réduite lorsque l'installation de signalisation routière (201) se trouve dans le premier état de fonctionnement.

7. Procédé selon la revendication 6, par lequel une force de rappel spécifiée est réglée lorsque le véhicule (101) ne peut pas atteindre la ligne d'arrêt (203) avec une vitesse de la plage de vitesse spécifiée lorsque l'installation de signalisation routière (201) se trouve dans le premier état de fonctionnement.

8. Procédé selon l'une des revendications 1 à 7, par lequel la force de rappel contrôlable pour la sollicitation du dispositif de commande (104) est annulée lorsque, pour une période dépassant une durée spécifiée, un moment d'entraînement demandé au moyen du dispositif de commande (104) est supérieur à l'état antérieur à la sollicitation du dispositif de commande (104) par la force de rappel contrôlable.

9. Procédé selon l'une des revendications 1 à 8, par lequel la force de rappel contrôlable pour la sollicitation du dispositif de commande (104) est annulée lorsque la position du dispositif de commande (104) est modifiée avec un taux de modification dépassant une valeur spécifiée, dans une direction opposée à la force de rappel.

10. Procédé selon l'une des revendications 1 à 9, par lequel le dispositif de commande (104) est conçu comme une pédale d'accélérateur.

11. Procédé selon l'une des revendications précédentes, par lequel le signal est envoyé par un dispositif d'émission (202) attribué à l'installation de signalisation routière (201) et est reçu dans le véhicule (101) au moyen d'une interface radio (111) du véhicule (101).

12. Système d'assistance à un utilisateur d'un véhicule (101), lequel s'approche d'une installation de signalisation routière (201), permet un franchissement d'une ligne d'arrêt (203) dans au moins un premier état de fonctionnement et ne permet pas un franchissement de la ligne d'arrêt (203) dans un deuxième état de fonctionnement, comprenant une installation de détermination de position, laquelle permet d'établir la position du véhicule et sa direction de déplacement, une interface de communication (111), laquelle est conçue pour recevoir un signal, lequel décrit l'état de fonctionnement actuel de l'installation de signalisation routière et la durée jusqu'à un changement de l'état de fonctionnement, une unité d'évaluation (301), laquelle est conçue pour vérifier, à l'aide du signal reçu, si le véhicule (101) peut atteindre la ligne d'arrêt (203) avec une vitesse d'une plage de vitesse spécifiée pendant que l'installation de signalisation routière (201) se trouve dans le premier état de fonctionnement, et une unité de commande (303), laquelle est conçue pour influencer une vitesse du véhicule (101) et/ou pour contrôler une génération d'une recommandation d'influence de la vitesse, en fonction du résultat de la vérification,
**caractérisé en ce que**
le système sollicite, avec une force de rappel contrôlable, un dispositif de commande (104) actionnable par l'utilisateur du véhicule pour l'influence d'un moment d'entraînement du véhicule (101) en fonction du résultat de la vérification, la force de rappel contrôlable pour la sollicitation du dispositif de commande (104) étant annulée lorsque la position du dispositif de commande (104) a été modifiée dans une direction opposée à la force de rappel.
